# EUROPEAN PATENT APPLICATION

(11) **EP 3 954 590 A1**
(43) Date of publication of application: **16.02.2022**
(21) Application number: 19924167.0
(22) Date of filing: 23.09.2019
(51) Int. Cl.: B60T 7/22, B60R 21/00, A01D 75/20

(54) **INTELLIGENT HARVESTER WITH INSTANTANEOUS STOP FUNCTION, AND INSTANTANEOUS STOP METHOD THEREFOR**

(30) Priority: 09.04.2019 CN 201910280373; 09.04.2019 CN 201920475210 U
(71) Applicant: FJ Dynamics Technology Co., Ltd, Xiangyang, Hubei 441100 (CN)
(72) Inventor: JIANG, Huan, Xiangyang, Hubei 441100 (CN); ZHANG, Xiao, Xiangyang, Hubei 441100 (CN); WANG, Bo, Xiangyang, Hubei 441100 (CN); WU, Di, Xiangyang, Hubei 441100 (CN); YAO, Yuan, Xiangyang, Hubei 441100 (CN); FAN, Shun, Xiangyang, Hubei 441100 (CN); WANG, Qingquan, Xiangyang, Hubei 441100 (CN)
(74) Representative: Zaboliene, Reda
(86) International application number: PCT/CN2019/107287
(87) International publication number: WO 2020/206950

(57) **Abstract**

An intelligent harvester with instantaneous stop functions includes a harvester body, a detecting system for detecting a human body within an area range on a traveling route of the harvester body, and a brake system arranged on the harvester body and operatively connected to the detecting system. When the detecting system detects a human body present within the area range on a traveling path of the harvester body, the brake system controls the harvester body to brake.

## Description

### FIELD

The subject matter relates to harvesters, and more particularly, to an intelligent harvester with instantaneous stop functions, and an instantaneous stop method of the intelligent harvester with instantaneous stop functions.

### BACKGROUND

With the development of science and technology, the field of agricultural machinery is developing rapidly, especially the harvester. More and more harvesters are being developed to become intelligent and autonomous, with goals to free people from heavy agricultural labor, and to improve the efficiency of agricultural production.

Traditional harvesters require a driver to drive, and the harvester driver controls the movement and operation of the harvester. During the operation of traditional harvesters, when an emergency occurs, for example, when someone suddenly appears on the traveling route of the vehicle, the driver of the harvester may be able to stop the harvester in time to avoid injuring to the person suddenly appeared on the traveling route of the harvester.

With intelligent harvesters, such as unmanned harvesters, there is no human driver during the operation of the harvester, and the intelligent harvesters walk along a preset route based on program control. When an emergency suddenly occurs on the traveling route of the unmanned harvester, such as a person jumping onto the route, the unmanned harvester cannot timely obtain such an occurrence, nor can it brake suddenly, to avoid injury to the person appeared on the route. Therefore, there is a great danger in the working process of unmanned harvester.

With the progress of society and the development of technology, the intelligence and unmanned of a combine harvester has become an inevitable development trend. Therefore, to solve the safety issues of intelligent harvesters is urgent.

### SUMMARY

The present disclosure provides an intelligent harvester with instantaneous stop functions and an instantaneous stop method thereof, the intelligent harvester can take emergency braking measures when an emergency occurs during driving, thereby improving the safety performance of the intelligent harvester.

The present disclosure provides an intelligent harvester with instantaneous stop functions and an instantaneous stop method thereof, the intelligent harvester with instantaneous stop functions can detect a human body within an area range on a traveling route of a harvester body of the intelligent harvester and, the harvester body is controlled to brake suddenly when a human body is detected within the area range on the traveling route of the harvester body.

The present disclosure provides an intelligent harvester with instantaneous stop functions and an instantaneous stop method thereof, a transmission assembly arranged on the harvester body is controlled to switch to a neutral position when a human body is detected within the area range on the traveling route of the harvester body, so that the harvester body stops moving.

The present disclosure provides an intelligent harvester with instantaneous stop functions and an instantaneous stop method thereof, a brake assembly arranged on the harvester body is controlled to brake suddenly when a human body is detected within the area range on the traveling route of the harvester body, so that the harvester body stops moving.

The present disclosure provides an intelligent harvester with instantaneous stop functions and an instantaneous stop method thereof, the intelligent harvester further includes a first infrared detector arranged at a front end of the harvester body, and the first infrared detector is configured to detect a human body within an area range on a traveling route in front of the harvester body.

The present disclosure provides an intelligent harvester with instantaneous stop functions and an instantaneous stop method thereof, the intelligent harvester further includes a second infrared detector arranged at a rear end of the harvester body, and the second infrared detector is configured to detect a human body within an area range on a traveling route behind the harvester body.

The present disclosure provides an intelligent harvester with instantaneous stop functions and an instantaneous stop method thereof, the intelligent harvester further includes a third infrared detector and a fourth infrared detector which are arranged on the left and right sides of the harvester body, the third infrared detector is configured to detect a human body within an area range on the left side of the harvester body, and the fourth infrared detector is configured to detect the human body within an area range on the right side of the harvester body.

The present disclosure provides an intelligent harvester with instantaneous stop functions and an instantaneous stop method thereof, the infrared detector arranged on the harvester body is a passive infrared detector with Fresnel lenses, which can effectively avoid the influence of small animals on the detection result and has high detection accuracy.

The present disclosure provides an intelligent harvester with instantaneous stop functions and an instantaneous stop method thereof, the intelligent harvester includes a first driving assembly arranged on the harvester body, the first driving assembly is driveably connected to the transmission assembly arranged on the harvester body, and the first driving assembly can drive the transmission assembly to switch between different gear positions.

The present disclosure provides an intelligent harvester with instantaneous stop functions and an instantaneous stop method thereof, the intelligent harvester further includes a second driving assembly arranged on the harvester body, the second driving assembly is driveably connected to the brake assembly arranged on the harvester body, and the second driving assembly can drive the brake assembly to brake.

The present disclosure provides an intelligent harvester with instantaneous stop functions and an instantaneous stop method thereof, the boundaries of detection areas of the first infrared detector, the second infrared detector, the third infrared detector, and the fourth infrared detector are adjacent to each other, and the detection areas of the four infrared detectors jointly surround the harvester body, thereby detecting the human bodies around the harvester in all directions.

The present disclosure provides an intelligent harvester with instantaneous stop functions and an instantaneous stop method thereof, the intelligent harvester with instantaneous stop functions has a simple structure and high safety.

The present disclosure provides an intelligent harvester with instantaneous stop functions and an instantaneous stop method thereof, the intelligent harvester with instantaneous stop functions is a crawler type intelligent harvester, which can adapt to soil conditions with relatively poor operating conditions and has a wide range of applications.

According to one aspect of the present disclosure, the present disclosure provides an intelligent harvester with instantaneous stop functions, which includes: a harvester body; a detecting system configured for detecting a human body within an area range on the traveling route of the harvester body; a brake system arranged on the harvester body and operatively connected to the detecting system. When the detecting system detects a human body within the area range on the traveling route of the harvester body, the brake system controls the harvester body to brake.

According to some embodiments of the present disclosure, the intelligent harvester with instantaneous stop functions further includes a transmission assembly arranged on the harvester body, the brake system is operatively connected to the transmission assembly. When the detecting system detects a human body within the area range on the traveling route of the harvester body, the brake system controls the transmission assembly to switch to a neutral position.

According to some embodiments of the present disclosure, the intelligent harvester with instantaneous stop functions further includes a brake assembly, the brake system is operatively connected to the brake assembly. When the detecting system detects a human body within the area range on the traveling route of the harvester body, the brake system controls the brake assembly to brake.

According to some embodiments of the present disclosure, the brake system includes a controller and a first driving assembly operatively connected to the controller, the controller is operatively connected to the detecting system, the first driving assembly is operatively connected to the transmission assembly. When the detecting system detects a human body within the area range on the traveling route of the harvester body, the controller controls the first driving assembly to drive the transmission assembly to switch to a neutral position.

According to some embodiments of the present disclosure, the brake system includes a controller and a second driving assembly operatively connected to the controller, the controller is operatively connected to the detecting system, the second driving assembly is operatively connected to the brake assembly. When the detecting system detects a human body within the area range on the traveling route of the harvester body, the controller controls the second driving assembly to drive the brake assembly to brake.

According to some embodiments of the present disclosure, the detecting system includes a first infrared detector arranged at a front end of the harvester body, the first infrared detector is operatively connected to the brake system, and the first infrared detector is configured to detect a human body within an area range in front of the harvester body.

According to some embodiments of the present disclosure, the detecting system includes a second infrared detector arranged at a rear end of the harvester body, the second infrared detector is operatively connected to the brake system, and the second infrared detector is configured to detect a human body within an area range behind the harvester body.

According to some embodiments of the present disclosure, the detecting system further includes a third infrared detector and a fourth infrared detector which are arranged on the left and right sides of the harvester body, the third infrared detector and the fourth infrared detector are operatively connected to the brake system, the third infrared detector is configured to detect a human body within an area range on the left side of the harvester body, and the fourth infrared detector is configured to detect a human body within an area range on the right side of the harvester body.

According to some embodiments of the present disclosure, the first, second, third, and fourth infrared detector each is a passive infrared detector with Fresnel lenses.

According to one aspect of the present disclosure, the present disclosure provides an instantaneous stop method of a crawler type intelligent harvester, the instantaneous stop method includes the following steps:

(a) detecting a human body within an area range on a traveling route of the harvester body;

(b) controlling the harvester body to brake when a human body is detected within the area range on the traveling route of the harvester body.

According to some embodiments of the present disclosure, the step (b) includes controlling a transmission assembly arranged on the harvester body to switch to a neutral position when a human body is detected within the area range on the traveling route of the harvester body.

According to some embodiments of the present disclosure, the step (b) includes controlling a brake assembly arranged on the harvester body to brake when a human body is detected within the area range on the traveling route of the harvester body.

According to some embodiments of the present disclosure, a human body within an area range on the traveling route of the harvester body is detected by an infrared detector.

According to some embodiments of the present disclosure, the infrared detector is a passive infrared detector with Fresnel lenses.

### BRIEF DESCRIPTION OF THE DRAWINGS

FIG. 1 is a block diagram of an intelligent harvester with instantaneous stop functions according to an embodiment of the present disclosure.
FIG. 2 is a diagrammatic view of an intelligent harvester with instantaneous stop functions according to an embodiment of the present disclosure.
FIG. 3 is a diagrammatic view of a detection area of an intelligent harvester with instantaneous stop functions according to an embodiment of the present disclosure.
FIG. 4 is a diagrammatic view of another detection area of an intelligent harvester with instantaneous stop functions according to an embodiment of the present disclosure.
FIG. 5 is a diagrammatic view of a detection area of an intelligent harvester with instantaneous stop functions according to a variant embodiment of the present disclosure.
FIG. 6 is a diagrammatic view of a detection area of an intelligent harvester with instantaneous stop functions according to a second variant embodiment of the present disclosure.
FIG. 7 is a diagrammatic view of a detection area of an intelligent harvester with instantaneous stop functions according to a third variant embodiment of the present disclosure.
FIG. 8 is a flowchart of an instantaneous stop method of an intelligent harvester with instantaneous stop functions according to an embodiment of the present disclosure.
FIG. 9 is a flowchart of an instantaneous stop method of an intelligent harvester with instantaneous stop functions according to an embodiment of the present disclosure.
FIG. 10 is a flowchart of an instantaneous stop method of an intelligent harvester with instantaneous stop functions according to an embodiment of the present disclosure.

### DETAILED DESCRIPTION

The following description is used to disclose the present disclosure so that those skilled in the art can implement the present disclosure. The preferred embodiments in the following description are only examples, and those skilled in the art can think of other obvious variations. The basic principles of the present disclosure defined in the following description can be applied to other embodiments, modifications, improvements, equivalents, and other technical solutions that do not deviate from the spirit and scope of the present disclosure.

Those skilled in the art should understand that, in the disclosure of the present disclosure, an orientation or a positional relationship indicated by the terms "longitudinal", "lateral", "upper", "lower", "front", "rear", "left", "right", "vertical", "horizontal", "top", "bottom", "inner", "outer", etc. is based on the orientation or the positional relationship shown in the drawings, which is only for the convenience of describing the present disclosure and simplify the description, rather than indicating or implying a device or an element must have a specific orientation, and is constructed and operated in a specific orientation, so the above terms should not be understood as a limitation of the present disclosure.

It can be understood that the term "a" should be understood as "at least one" or "one or more", that is, in one embodiment, the number of a kind of element may be one, and in another embodiment, the number of the kind of element can be more than one, and the term "one" cannot be understood as a restriction on the number.

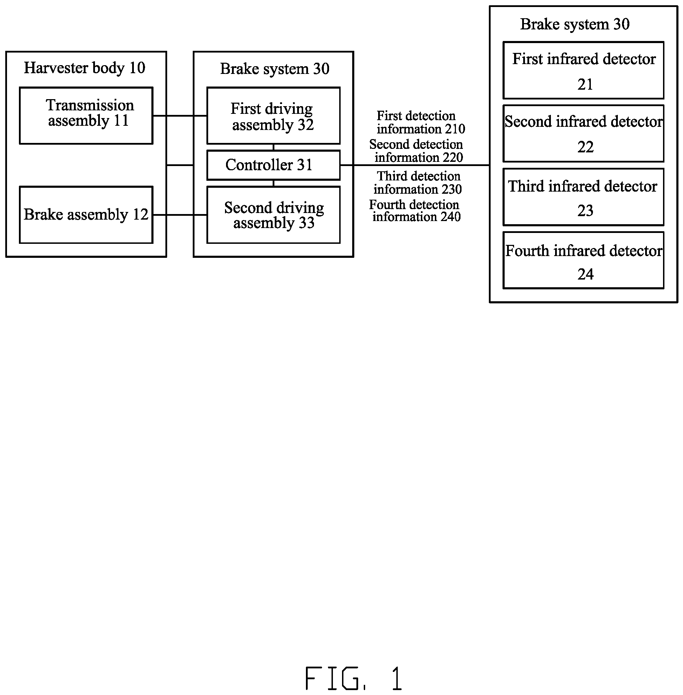

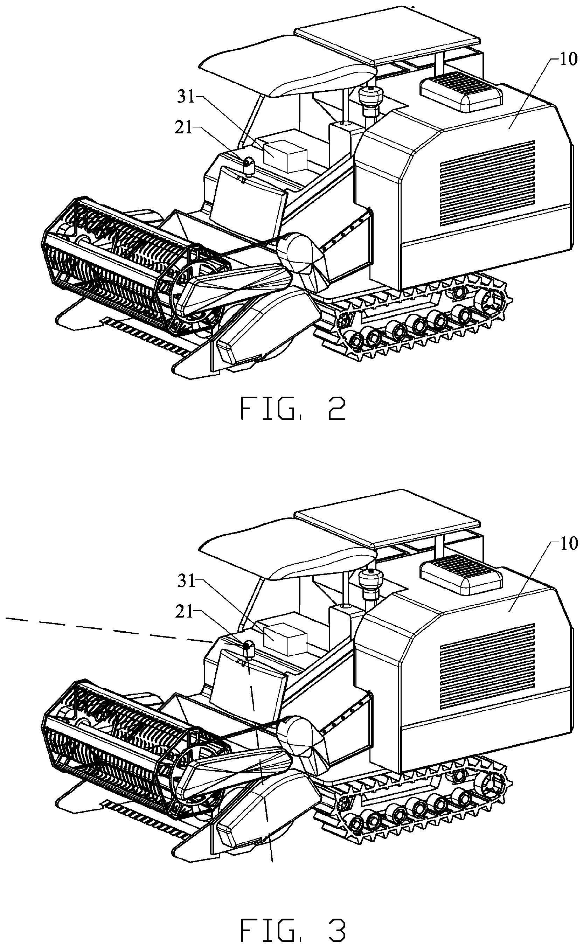

Referring to FIGS. 1 to 7, an intelligent harvester with instantaneous stop functions is provided according to an embodiment of the present disclosure. The intelligent harvester with instantaneous stop functions can automatically complete the operation task without a driver and take emergency braking measures when an emergency occurs during the operation, to prevent injury to human body, thereby improving the safety of the harvester. Specifically, the intelligent harvester with instantaneous stop functions is a crawler type intelligent harvester, that is, the intelligent harvester with instantaneous stop functions drives a harvester body to move by contacting a crawler with the ground, so as to effectively increase the contact area with the ground. On the contrary, the intelligent harvester falls into the land when operating on a relatively soft land, which effectively improves the operation efficiency and adaptability of the intelligent harvester to the land.

The intelligent harvester with instantaneous stop functions includes a harvester body 10, a detecting system 20 arranged on the harvester body 10, and a brake system 30 arranged on the harvester body 10. The brake system 30 is operatively connected to the harvester body 10 and the detecting system 20. The detecting system 20 is configured to detect the environmental information on a traveling route. When the detecting system 20 detects an emergency on the traveling route of the harvester body 10, the brake system 30 takes braking measures to control the harvester body 10 to stop moving.

Furthermore, when the detecting system 20 detects an emergency on the traveling route of the harvester body 10, the detecting system 20 generates a first detection information 210, the brake system 30 obtains the first detection information 210 from the detecting system 20, and controls the harvester body 10 to take emergency braking measures according to the first detection information 210, so as to control the harvester body 10 to stop quickly. The emergency on the traveling route of the harvester body 10 refers to the human body on the traveling route of the harvester body 10. In other words, when the detecting system 20 detects a human body appeared on the traveling route of the intelligent harvester body 10, the detection system 20 generates the first detection information 210.

The detecting system 20 further includes at least one first infrared detector 21 arranged on the harvester body 10. The first infrared detector 21 is used to detect a human body on the traveling route of the harvester body 10 by an infrared detection manner. The first infrared detector 21 is operatively connected to the brake system 30. When the first infrared detector 21 detects a human body appeared in front of the harvester body 10 on the traveling route of the harvester body 10, the first detection information 210 is generated, the brake system 30 obtains the first detection information 210 from the first infrared detector 21 and controls the harvester body 10 to take emergency brake.

The first infrared detector 21 is arranged at a front end of the harvester body 10 and configured to detect whether a human body is present on a traveling route in front of the harvester body. During the operation of the harvester with instantaneous stop functions, when a human body suddenly appears on the traveling route in front of the harvester body 10, the first infrared detector 21 arranged at the front end of the harvester body 10 can detect the presence of the human body and generate the first detection information 210, the brake system 30 controls the harvester body 10 to take emergency braking measures based on the first detection information 210 to the harvester body 10 from moving forward, which will cause injury to the human body who suddenly appears on a forward route of the harvester body 10, thus the safety of the harvester is improved.

The first infrared detector 21 is a passive infrared detector with Fresnel lenses, which can effectively avoid the influence of small animals on the detection results. That is, the first detection information 210 generated after the first infrared detector 21 detects a human body present on a traveling route in front of the harvester body 10. When the first infrared detector 21 detects a small animal present on a traveling route in front of the harvester body 10, the first infrared detector 21 does not generate the first detection information, so that the accuracy of the detecting result of the first infrared detector 21 is improved.

The brake system 30 further includes a controller 31 and a first driving assembly 32. The controller 31 is operatively connected to the detecting system 20 and the first driving assembly 32. The controller 21 and the first driving assembly 32 are arranged on the harvester body 10, the first driving assembly 32 is driveably connected to a commission assembly 11 of the harvester body 10, and the first driving assembly 32 can drive the commission assembly 11 of the harvester body 10 to switch between different gear positions.

Specifically, the controller 31 of the brake system 30 is operatively connected to the first infrared detector 21 of the detecting system 20. The controller 30 can obtain the first detection information from the first infrared detector 21 and controls the transmission assembly 11 to switch between different gear positions based on the first detection information.

When the first infrared detector 21 detects a human body present on a traveling path in front of the harvester body 10, the first infrared detector 21 generates the first detection information 210, the controller 31 obtains the first detection information 210 from the first infrared detector 21 and controls the first driving assembly 32 according to the first detection information, the first driving assembly 32 controls the transmission assembly 11 to switch to a neutral position, so that the harvester body 10 stops moving.

Specifically, the transmission 11 arranged on the harvester body 10 is a hydro static transmission (HST), the first driving assembly 32 is operatively connected to the HST. When the first infrared detector 21 detects a human body on a traveling route in front of the harvester body 10 and generates the first detection information 210, the controller 31 controls the first driving assembly 32 according on the first detection information 210, the first driving assembly 32 drives the HST to switch to the neutral position, so that the harvester body 10 stops moving.

The first driving assembly 32 is a drive motor, which is driveably connected to the transmission assembly 11 of the harvester body 10, that is, the drive motor is driveably connected to the HST, and the drive motor can drive the HST to switch between different gear positions. When the first infrared detector 21 detects a human body on the traveling route in front of the harvester body 10, the first detection information 210 is generated, the controller 31 obtains the first detection information 210 and controls the drive motor according to the first detection information, the drive motor controls the HST to switch to the neutral position, so that the harvester body 10 stops moving, thus avoiding injuring to the human body who suddenly appears on the traveling route in front of the harvester body 10 and improving the safety of the harvester.

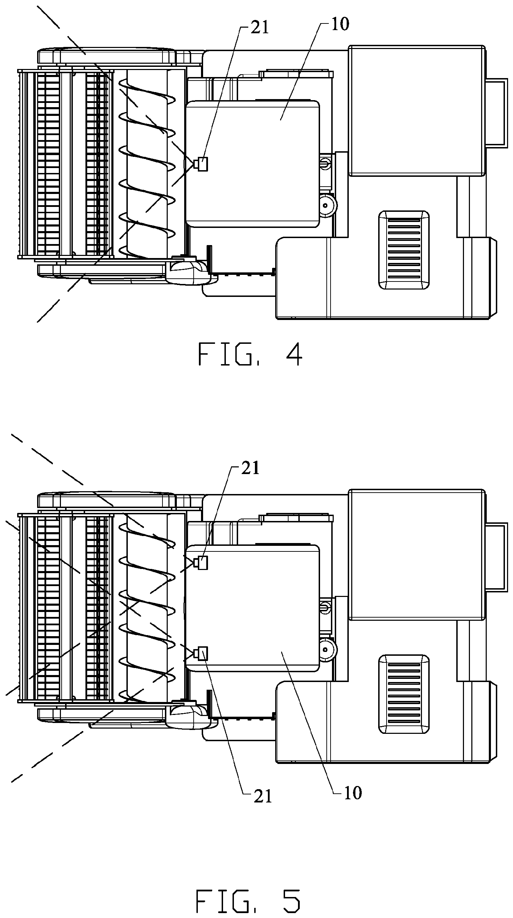

Referring to FIGS. 4 and 5, a detection area of the first infrared detector 21 of the intelligent harvester is provided. The first infrared detector 21 is arranged at the front end of the harvester body 10, the first infrared detector 21 can detect a human body within an area range on the traveling route in front of the harvester body 10. Preferably, a horizontal width of the detection area on the traveling route in front of the harvester body 10 that can be detected by the first infrared detector 21 is equivalent to a horizontal width of the harvester body 10, and a vertical height of the detection area on the traveling route in front of the harvester body 10 that can be detected by the first infrared detector 21 is equivalent to a vertical height of the harvester body 10. An angle of the first infrared detector 21 arranged on the harvester body 10 can be changed to change the horizontal range and vertical range of the area that can be detected by the first infrared detector 21.

Referring to FIG. 5, in some embodiments, the number of the first infrared detectors 21 arranged on the harvester body 10 can also be, but not limited to, two, three, four, five, six, etc. As long as the purpose of the disclosure can be achieved, the number of the first infrared detectors 21 arranged on the harvester body 10 should not constitute a limitation on the disclosure.

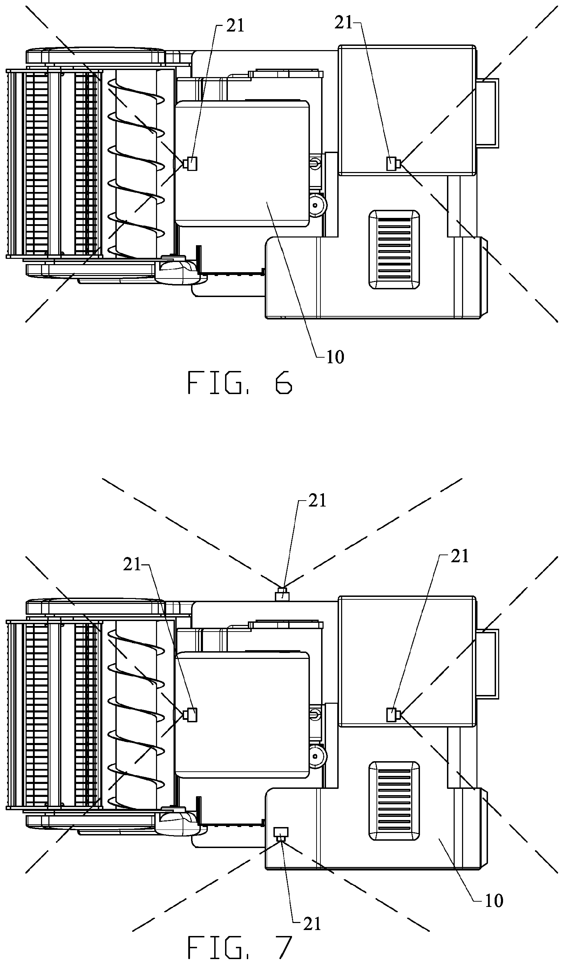

Referring to FIG. 6, an intelligent harvester with identification functions is provided according to a first variant embodiment of the present disclosure. In the intelligent harvester with identification functions of the first variant embodiment, the detecting system 20 further includes a second infrared detector 22, the second infrared detector 22 is arranged at a rear end of the harvester body 10, and the second infrared detector 22 is used to detect a human body within an area range behind the harvester body 10. The second infrared detector 22 is operatively connected to the controller 31. During the revers travel of the harvester body 10, when the second infrared detector 22 detects a human body within a certain distance from the rear end of the harvester body 10, the second infrared detector 22 generates a second detection information 220. The controller 31 can obtain the second detection information 220 from the second infrared detector 22 and controls the first driving assembly 32 according to the second detection information 220, and the first driving assembly 32 drives the transmission assembly 11 to switch to the neutral position, so that the harvester body 10 stops moving.

The second infrared detector 22 is also a passive infrared detector with Fresnel lens, which can effectively prevent the influence of small animals on the accuracy of detection results and improve the accuracy of detection results of the second infrared detector 22.

The detecting system 20 further includes a third infrared detector 23 and a fourth infrared detector 24. The third infrared detector 23 and the fourth infrared detector 24 are respectively arranged on the left and right sides of the harvester body 10, the third infrared detector 23 is used to detect a human body within an area range on the left side of the harvester body 10, and the fourth infrared detector 24 is used to detect a human body within an area range on the right side of the harvester body 10.

The third infrared detector 23 and the fourth infrared detector 24 are operatively connected to the controller 31. During the left turn of the harvester body 10, when the third infrared detector 23 detects a human body within the area range on the left of the harvester body 10, the third infrared detector 23 generates a third detection information 230. The controller 31 can obtain the third detection information 230 and controls the first driving assembly 32 according to the third detection information 230, and the first driving assembly 32 drives the transmission assembly 11 to switch to the neutral position, so that the harvester body 10 stops turning to the left, thus avoiding injuring to the human body who appears within an area range on the left of the harvester body 10. During the right turn of the harvester body 10, when the fourth infrared detector 24 detects a human body within an area range on the right of the harvester body 10, the fourth infrared detector 24 generates a fourth detection information 240. The controller 31 can obtain the fourth detection information 240 from the fourth infrared detector 24 and controls the first driving assembly 32 according to the fourth detection information, and the first driving assembly 32 drives the transmission assembly 11 to switch to the neutral position, so that the harvester body 10 stops turning to the right.

Each of the third infrared detector 23 and the fourth infrared detector 24 is a passive infrared detector with Fresnel lens, which can effectively prevent the influence of small animals on the accuracy of detection results and improve the accuracy of detection results of the third infrared detector 23 and the fourth infrared detector 24.

The detection areas formed by the first infrared detector 21, the second infrared detector 22, the third infrared detector 23 and the fourth infrared detector 24 are adjacent to each other. The detection areas of the four infrared detectors jointly surround the harvester body, thereby detecting the human bodies around the harvester body in an all direction. That is, the human body at any position around the harvester body 10 can be detected by the first infrared detector 21, the second infrared detector 22, the third infrared detector 23 or the fourth infrared detector 24, so as to ensure the safety of the human body during the operation of the harvester body 10, the safety of the harvester body is improved.

The detection range of each of the first infrared detector 21, the second infrared detector 22, the third infrared detector 23, and the fourth infrared detector 24 is 5m, that is, when there is someone within 5 meters from the harvester body 10, at least one of the first infrared detector 21, the second infrared detector 22, the third infrared detector 23,and the fourth infrared detector 24 can detect the presence of a human body and send a corresponding detection information to the controller 31.

Referring to FIG. 7, an intelligent harvester with identification functions is provided according to a second variant embodiment of the present disclosure. In the intelligent harvester with identification functions of the second variant embodiment, the brake system 30 further includes a second driving assembly 33, the second driving assembly 33 is operatively connected to the controller 31, the controller 31 can control a working state of the second driving assembly 33. The second driving assembly 33 is also operatively connected to a brake assembly 12 of the harvester body 10, the second driving assembly 33 can control the operation of the brake assembly 12, so that the harvester body 10 can be braked suddenly to prevent the harvester body 10 from moving.

Specifically, when the first infrared detector 21 detects a human body who appears on the traveling path in front of the harvester body 10, the first infrared detector 21 generates the first detection information 210, the controller 31 controls the second driving assembly 33 according to the first detection information 210, and the second driving assembly 33 drives the brake assembly 12 to brake, so that the harvester body 10 stops moving, thus avoiding injuring to the human body who suddenly appears on the traveling path of the harvester body 10, the safety of the intelligent harvester is improved.

It is to be understood, while the controller 31 obtains the first detection information 210 to control the second drive assembly 33 to drive the brake assembly 12 to brake, the controller 31 simultaneously controls the first drive assembly 32 to control the transmission assembly 11 to switch to the neutral position. In other words, when the controller 31 obtains the first detection information 210, the controller 31 controls the brake assembly 12 to brake suddenly and simultaneously controls the transmission assembly 11 to switch to the neutral position, so that the harvester body 10 can be braked suddenly, thus avoiding injuring to the human body who suddenly appears on the traveling path in front of the harvester body 10, the safety of the intelligent harvester is improved.

When the controller 31 obtains the second detection information 220, the third detection information, and the fourth detection information 240 from the second infrared detector 22, the third infrared detector 23, and the fourth infrared detector 24 respectively, the controller 31 controls the transmission assembly to switch to the neutral position via the first driving assembly 32 and controls the brake assembly 12 to brake via the second driving assembly 33 simultaneously, so that the harvester body 10 can take emergency brake, thus avoiding injuring to the human body who appears on the traveling path of the harvester body 10, the safety of the intelligent harvester is improved.

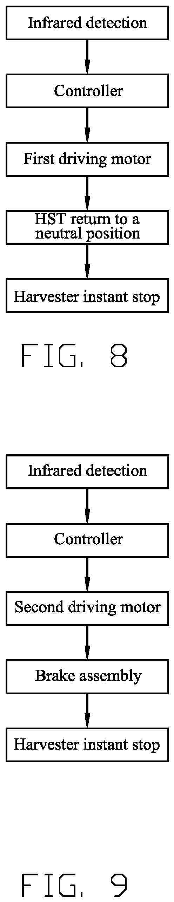

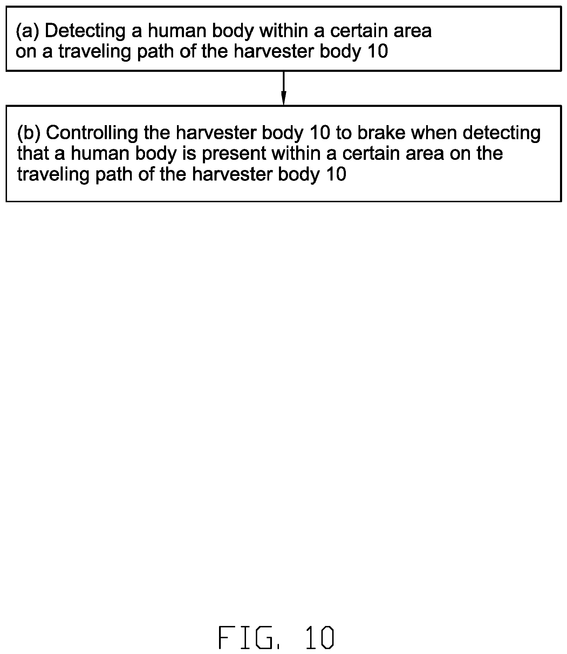

Referring to FIGS. 8 to 10, an instantaneous stop method of a crawler type intelligent harvester is provided according to other aspect of the present disclosure. The instantaneous method includes the following steps:
(a) detecting a human body within an area range on the traveling route of the harvester body 10; and
(b) controlling the harvester body 10 to brake when a human body is detected within the area range on the traveling path of the harvester body 10.

According to one embodiment of the present disclosure, the step (b) includes controlling the transmission assembly 11 arranged on the harvester body 10 to switch to the neutral position when a human body is detected within the area range on the traveling route of the harvester body.

According to one embodiment of the present disclosure, the step (b) includes controlling the brake assembly 12 arranged on the harvester body 10 to brake when a human body is detected within the area range on the traveling route of the harvester body.

According to one embodiment of the present disclosure, a human body within the area range on the traveling route of the harvester body is detected by an infrared detector.

In some embodiments, the infrared detector is a passive infrared detector with Fresnel lenses, which can effectively avoid the influence of small animals on the detection results.

The intelligent harvester further includes the first infrared detector 21 arranged at the front end of the harvester body 10, the first infrared detector 21 is used to detect a human body within the area range in front of the harvester body 10.

The intelligent harvester further includes the second infrared detector 22 arranged at the rear end of the harvester body 10, the second infrared detector 22 is used to detect a human body within the area range behind the harvester body 10.

The intelligent harvester further includes the third infrared detector 23 and the fourth infrared detector 24 which are respectively arranged on the left and right sides of the harvester body 10, the third infrared detector 23 is used to detect a human body within the area range on the left side of the harvester body 10, and the fourth infrared detector 24 is used to detect a human body within the area range on the right side of the harvester body 10.

The intelligent harvester further includes the controller 31 and the first driving assembly 32 operatively connected to the controller 31, the controller 31 is operatively connected to the infrared detectors. When the infrared detectors detect a human body who appears on the traveling route of the harvester body 10, the first driving assembly 32 drives the first transmission assembly 11 arranged on the harvester body 10 to switch to the neutral position.

The intelligent harvester further includes the second driving assembly 33 operatively connected to the controller 31, the second driving assembly 33 is operatively connected to the brake assembly 12 arranged on the harvester body 10. When the infrared detectors detect a human body who appears on the traveling route of the harvester body 10, the second driving assembly 33 drives the brake assembly 12 arranged on the harvester body 10 to brake, so that the harvester body 10 stops moving, thus avoiding injuring to the human body who suddenly appears on the traveling path of the harvester body 10, the safety of the intelligent harvester is improved.

Those skilled in the art can understand that the above embodiments are only examples, in which the features of different embodiments can be combined with each other to obtain implementations that are easily conceivable according to the disclosure of the present disclosure but are not clearly indicated in the drawings.

Those skilled in the art should understand that the above description and the embodiments of the present disclosure shown in the drawings are only examples and do not limit the present disclosure. The purpose of the present disclosure has been completely and effectively achieved. The functions and structural principles of the present disclosure have been shown and explained in the embodiments. Without departing from the principles, the implementation of the present disclosure may have any deformation or modification.

## Claims

1. An intelligent harvester with instantaneous stop functions, comprising:
a harvester body;
a detecting system configured for detecting a human body within an area range on a traveling path of the harvester body; and
a brake system, wherein the brake system is arranged on the harvester body and operatively connected to the detecting system, when the detecting system detects a human body within the area range on the traveling path of the harvester body, the brake system controls the harvester body to brake.

2. The intelligent harvester with instantaneous stop functions of claim 1, further comprising a transmission assembly arranged on the harvester body, wherein the brake system is operatively connected to the transmission assembly, when the detecting system detects a human body within the area range on the traveling path of the harvester body, the brake system controls the transmission assembly to switch to a neutral position.

3. The intelligent harvester with instantaneous stop functions of claim 1, further comprising a brake assembly, wherein the brake system is operatively connected to the brake system, when the detecting system detects a human body within the area range on the traveling path of the harvester body, the brake system controls the brake assembly to brake.

4. The intelligent harvester with instantaneous stop functions of claim 2, further comprising a brake assembly, wherein the brake system is operatively connected to the brake system, when the detecting system detects a human body within the area range on the traveling path of the harvester body, the brake system controls the brake assembly to brake.

5. The intelligent harvester with instantaneous stop functions of claim 2, wherein the brake system comprises a controller and a first driving assembly operatively connected to the controller, the controller is operatively connected to the detecting system, the first driving assembly is operatively connected to the transmission assembly, when the detecting system detects a human body within the area range on the traveling path of the harvester body, the controller controls the first driving assembly to drive the transmission assembly to switch to the neutral position.

6. The intelligent harvester with instantaneous stop functions of claim 3, wherein the brake system comprises a controller and a second driving assembly, the controller is operatively connected to the detecting system, the second driving assembly is driveably connected to the brake assembly, when the detecting system detects a human body within the area range on the traveling path of the harvester body, the controller controls the second driving assembly to drive the brake assembly to brake.

7. The intelligent harvester with instantaneous stop functions of claim 1, wherein the detecting system comprises a first infrared detector arranged at a front end of the harvester, the first infrared detector is operatively connected to the brake system, the first infrared detector is configured to detect a human body within the area range on the traveling route in front of the harvester body.

8. The intelligent harvester with instantaneous stop functions of claim 6, wherein the detecting system comprises a first infrared detector arranged at a front end of the harvester, the first infrared detector is operatively connected to the brake system, the first infrared detector is configured to detect a human body within the area range on the traveling route in front of the harvester body.

9. The intelligent harvester with instantaneous stop functions of claim 8, wherein the detecting system further comprises a second infrared detector arranged at a rear end of the harvester body, the second infrared detector is operatively connected to the brake system, the second infrared detector is configured to detect a human body within the area range on the traveling route behind the harvester body.

10. The intelligent harvester with instantaneous stop functions of claim 9, wherein the detecting system further comprises a third infrared detector and a fourth infrared detector which are respectively arranged on left and right sides of the harvester body, the third infrared detector and the fourth infrared detector are operatively connected to the brake system, the third infrared detector is configured to detect a human body within the area range on a left side of the harvester body, and the fourth infrared sensor is configured to detect a human body within the area range on a right side of the harvester body.

11. The intelligent harvester with instantaneous stop functions of claim 8, wherein each of the first infrared detector, the second infrared detector, the third infrared detector, and the fourth infrared detector is a passive infrared detector with Fresnel lenses.

12. The intelligent harvester with instantaneous stop functions of claim 9, wherein each of the first infrared detector, the second infrared detector, the third infrared detector, and the fourth infrared detector is a passive infrared detector with Fresnel lenses.

13. The intelligent harvester with instantaneous stop functions of claim 10, wherein each of the first infrared detector, the second infrared detector, the third infrared detector, and the fourth infrared detector is a passive infrared detector with Fresnel lenses.

14. An instantaneous stop method of a crawler type intelligent harvester comprising:
(a) detecting a human body within an area range on a traveling route of a harvester body of the intelligent harvester;
(b) controlling the harvester body to brake when a human body is detected within the area range on the traveling path of the harvester body.

15. The instantaneous stop method of a crawler type intelligent harvester of claim 14, wherein the step (b) comprising controlling a transmission assembly arranged on the harvester body to switch to a neutral position when a human body is detected within the area range on the traveling path of the harvester body.

16. The instantaneous stop method of a crawler type intelligent harvester of claim 15, wherein the step (b) comprising controlling a brake assembly arranged on the harvester body to brake when a human body is detected within the area range on the traveling path of the harvester body.

17. The instantaneous stop method of a crawler type intelligent harvester of claim 14, wherein a human body within the area range on the traveling route of the harvester body is detected by an infrared detector.

18. The instantaneous stop method of a crawler type intelligent harvester of claim 15, wherein a human body within the area range on the traveling route of the harvester body is detected by an infrared detector.

19. The instantaneous stop method of a crawler type intelligent harvester of claim 16, wherein a human body within the area range on the traveling route of the harvester body is detected by an infrared detector.

20. The instantaneous stop method of a crawler type intelligent harvester of claim 19, wherein the infrared detector is a passive infrared detector with Fresnel lenses.
